# EUROPÄISCHE PATENTSCHRIFT

(11) **EP 2 837 872 B1**
(45) Veröffentlichungstag und Bekanntmachung des Hinweises auf die Patenterteilung: **12.10.2016**
(21) Anmeldenummer: 14181000.2
(22) Anmeldetag: 14.08.2014
(51) Int. Cl.: F16N 31/00, F16N 31/02

(54) **Lageranordnung**
Bearing assembly
Système de palier

(30) Priorität: 14.08.2013 DE 102013216140
(43) Veröffentlichungstag der Anmeldung: 18.02.2015
(73) Patentinhaber: Aktiebolaget SKF, 415 50 Göteborg (SE)
(72) Erfinder: Koch, Thomas, 97650 Oberfladungen (DE); Liang, Baozhu, 97456 Hambach (DE); Ullmann, Johannes, 97539 Wonfurt (DE); Wiget, Stefan, 97332 Volkach (DE)
(74) Vertreter: Kuhstrebe, Jochen

(56) Entgegenhaltungen:
- EP-A1- 2 166 242
- EP-A1- 2 620 642
- DE-A1-102012 215 217

## Beschreibung

Die Erfindung betrifft eine Lageranordnung, die einen ersten, stationären Lagerring und einen zweiten, rotierenden Lagerring umfasst, wobei zwischen den beiden Lagerringen ein zumindest teilweise mit einem Schmiermittel gefüllter Ringraum ausgebildet ist, wobei an dem zweiten rotierenden Lagerring ein Abstreifelement angeordnet ist, das zumindest über einen Abschnitt des Umfangs des ersten Lagerrings im Bereich der Stirnseiten der Lagerringe anliegt.

Gattungsgemäße Lageranordnungen werden in einer Vielzahl von Anwendungen eingesetzt. Häufig ist dabei der Ringraum zwischen Außen- und Innenring mittels Dichtungselementen abgedichtet, so dass zum einen Schmutz nicht in das Innere des Lagers gelangen kann und zum anderen auch das Schmiermittel (Öl oder Fett) nicht aus dem Lager austreten kann.

Insbesondere im Falle von Großlagern ist es nicht immer möglich und sinnvoll, eine vollständige Abdichtung vorzusehen. Demgemäß kommt es im Betrieb derartiger Lager zu einer Leckage an Schmiermittel. Daher kann es im Betrieb zu unkontrolliertem Austritt des Schmiermediums kommen. Dabei wird in vielen Fällen aufgrund der Rotation eines Lagerrings das Schmiermedium in der Umgebung verschleudert.

Aus der DE 10 2012 215 217 A1 ist ein Abstreifersystem für gattungsgemäße Lageranordnungen bekannt, bei der Abstreiferelemente die Stirnseiten der Lagerringe abstreifen und das überschüssige bzw. austretende Schmierfett zu einer Sammelstelle leiten. Nachteilig ist es hier aber, dass sich Fettüberschüsse mit unterschielichem Gebrauchsalter vermischen können. Dies ist bedingt durch den Umstand, dass der Abstreifer ständig am Austrittsspalt anliegt und im Laufe der Zeit Fettreste aufnimmt, die verschieden lange im Einsatz waren.

Der Erfindung liegt daher die Aufgabe e zugrunde, eine gattungsgemäße Lageranordnung so weiterzubilden, dass überschüssiges Schmiermittels, das aus dem Ringraum zwischen den Lagerringen austritt, sicher entsorgt bzw. entfernt werden kann, wobei insbesondere dafür Sorge getragen werden soll, dass sich Schmiermittel unterschiedlichen Alters nicht vermischt. Ferner soll eine bessere Kontrolle des Sammelns von austretendem Schmiermittel ermöglicht werden.

Die Lösung dieser Aufgabe durch die Erfindung ist dadurch gekennzeichnet, dass Mittel vorhanden sind, mit denen das Abstreifelement über einen definierten Umfangsabschnitt des ersten Lagerrings von den Stirnseiten der Lagerringe in axiale Richtung abgehoben und an mindestens einem Schmierstoffabstreifer vorbeigeführt wird.

Die Mittel umfassen dabei bevorzugt einen Leitfinger, der an dem Abstreifelement angeordnet ist, und ferner eine Führungsschiene für den Leitfinger, die an dem stationären Lagerring angeordnet ist. Die Führungsschiene setzt sich - eine Führungskulisse für den Leitfinger bildend - bevorzugt aus drei Abschnitten zusammen, wobei die in Umfangsrichtung des ersten Lagerrings endseitig gelegenen Abschnitte als Rampen für den Leitfinger ausgebildet sind und wobei ein sich zwischen den endseitig gelegenen Abschnitten befindlicher mittiger Abschnitt als in Umfangsrichtung des ersten Lagerrings verlaufender Abschnitt ausgebildet ist; der mittige Abschnitt läuft also kreisabschnittsförmig um die Drehachse des Lagers um. Die Führungsschiene besteht bevorzugt aus einem Draht, der zum Anlauf des Leitfingers ausgebildet ist.

Das Abstreifelement wird vorzugsweise mit elastischen Vorspannmitteln gegen den Bereich der Stirnseite der Lagerringe gedrückt.

Das Abstreifelement ist hierbei bevorzugt an einem Tragarm angeordnet, wobei der Tragarm am zweiten, rotierenden Lagerring angeordnet ist. Hierbei sieht eine bevorzugte Weiterbildung vor, dass zwischen dem Tragarm und dem Abstreifelement ein Drehgelenk wirksam angeordnet ist, mit dem das Abstreifelement um eine in axiale Richtung weisende Drehachse gedreht werden kann. Hiermit ist es möglich, das Abstreifelement in seiner Anlage an den Stirnseiten der Lagerringe optimal anzupassen.

Im Bereich der Mittel zum Abheben des Abstreifelements sind bevorzugt zwei Schmierstoffabstreifer angeordnet, die bei der Rotation des zweiten Lagerrings vom Abstreifelement überstrichen werden. Ein erster Schmierstoffabstreifer weist bevorzugt einen ortsfesten zylinderförmigen Körper auf, dessen Längsachse in radiale Richtung weist. Ein zweiter Schmierstoffabstreifer hat vorzugsweise einen rotierenden zylinderförmigen Körper, dessen Längsachse in radiale Richtung weist. Der erste Schmierstoffabstreifer dient dem groben Abwischen von Schmiermittel. Der zweite Schmierstoffabstreifer ist indes für das feine Abwischen von Schmiermittel vorgesehen. Der zweite Schmierstoffabstreifer kann allerdings auch anders ausgebildet sein, beispielsweise als stationäres Element mit einem beispielsweise L-förmigen Profil.

Somit kann bei jeder Umdrehung des rotierenden Lagerrings vom Abstreifelement gesammeltes Schmiermittel abgestriffen und so gesammelt werden. Dieses Element hat auch die Funktion eines kontinuierlichen Abstreifens von Schmiermittel vom rotierenden Lagerring.

Die Mittel zum Abheben des Abstreifelements sind bevorzugt in einem vertikal am tiefsten liegenden Bereich der Lagerringe angeordnet, d. h. in der "6-Uhr-Position" am ortsfesten Lagerring.

Vorgesehen werden kann auch ein am statischen (ortsfesten) Lagerring befestigter Ausstreifer (Eingriffselement), der kontinuierlich den Spalt zwischen Innen- und Außenring der Lageranordnung reinigt.

Um Leckagen von Schmierfett bzw. Öl über den Umfang des ortsfesten Lagerrings zu sammeln, ist also ein rotierendes Wischersystem vorgesehen, das über den ortsfesten Lagerring gleitet, austretendes Fett sammelt und dann an der Mediumsammelstelle mittels des Schmierstoffabstreifers abstreift. Das Wischersystem ist dabei mit dem rotierenden Lagerring verbunden und wird mittels Federkraft an die statische Fläche (Strirnseite) angepresst. Um eine optimale Anschmiegung zu erzielen, werden entsprechende Gelenke im Abstreifer vorgesehen.

In Bereich der Leckagesammelzone wird der Abstreifer mittels Führungsfinger und Gleitschiene erfindungsgemäß definiert abgehoben, um das Abstreifen von "Neufett" ohne Kontakt mit "Altfett" sicherzustellen.

Somit ermöglicht die vorliegende Erfindung ein kontrolliertes Sammeln von austretendem Schmiermedium auch bei unerwartet auftretender Leckage.

Diese Möglichkeit kann genutzt werden, um den Fettaustausch definiert zu steuern.

Somit kann auf Fettaustrittsbohrungen und traditionelle Sammelvorrichtungen verzichtet werden.

Die Dichtung muss nicht für vollständige Dichtheit ausgelegt werden, so dass der Verschleiß der Lageranordnung zurückgeht und somit die Lebensdauer erhöht wird.

Über einen definierten Fettauslauf über den Dichtspalt nach außen können keine Partikel in das Lager kommen, so dass auf eine Staubdichtung verzichtet werden kann.

Das verbrauchte Fett, das über den Spalt zwischen rotierendem und statischem Lagerring im Umfang austritt, wird daher mittels des Abstreifsystems definiert an einer Position gesammelt.

Demgemäß schlägt die Erfindung ein effizientes Abstreifersystem für Schmiermedien bei Wälzlagern vor.

In der Zeichnung ist ein Ausführungsbeispiel der Erfindung dargestellt. Es zeigen:
- Fig. 1: in perspektivischer Darstellung den untenliegenden Bereich einer Lageranordnung mit rotierendem Innenring und ortsfestem Außenring,
- Fig. 2: die Ansicht des Bereichs gemäß Fig. 1, gesehen in Achsrichtung der Lageranordnung, mit Darstellung der erfindungsgemäßen Mittel zum Abheben eines Abstreifelements,
- Fig. 3: in perspektivischer Darstellung ein Abstreifelement, das an einem Tragarm befestigt ist,
- Fig. 4: in perspektivischer Darstellung einen ersten Schmierstoffabstreifer und
- Fig. 5: in perspektivischer Darstellung einen zweiten Schmierstoffabstreifer.

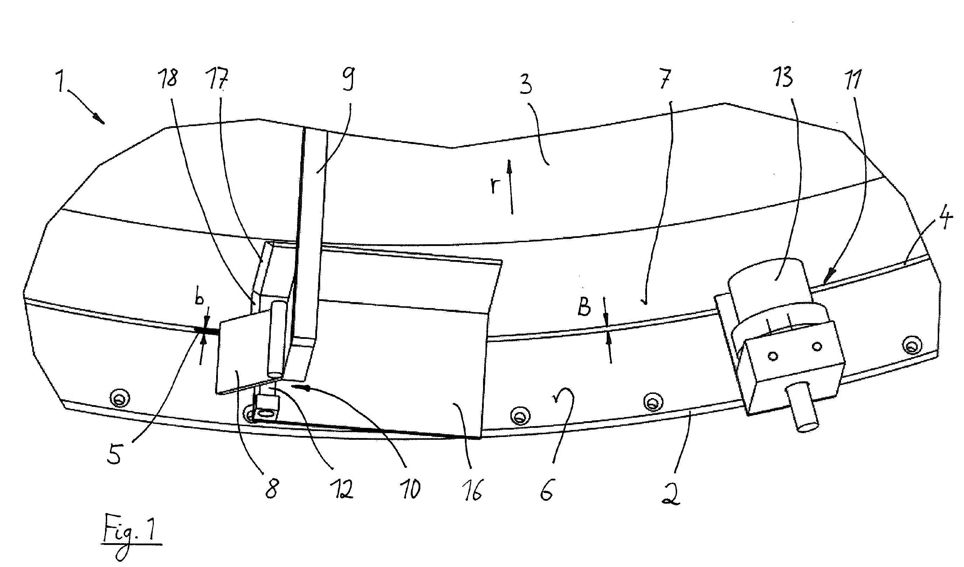

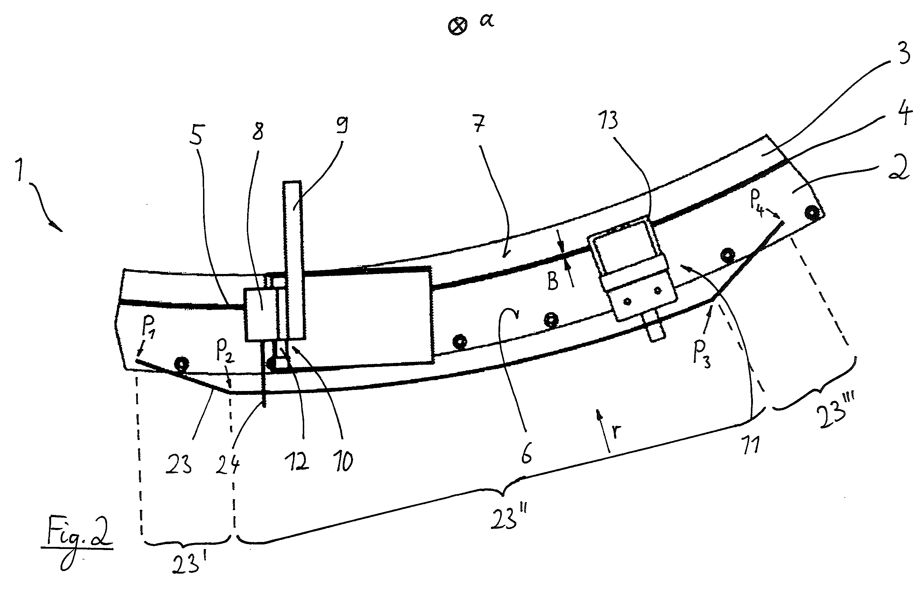

In Fig. 1 und in Fig. 2 ist eine Lageranordnung 1 zu sehen, bei der es sich um ein Großlager, beispielsweise für eine Windkraftanlage, handelt. Die Lageranordnung 1 umfasst einen ersten Lagerring 2, der als stationärer Außenring ausgebildet ist, sowie einen zweiten Lagerring 3, der als rotierender Innenring ausgebildet ist. Die beiden Lagerringe 2, 3 haben Stirnseiten 6 bzw. 7, die fluchtend ausgebildet sind. Zwischen den beiden Lagerringen 2, 3 wird ein Ringraum 4 ausgebildet. Im Bereich der Stirnseiten 6, 7 weist der Ringraum 4 eine Breite B, gemessen in radiale Richtung r, auf.

Natürlich ist generell auch die umgekehrte Ausgestaltung möglich, d. h. ein sich drehender Außenring und ein stationärer Innenring.

Am ortsfesten, d. h. stationären Lagerring 2, vorliegend also am Außenring der Lageranordnung 1, ist ein Eingriffselement 5 angeordnet. Dieses ist am besten in Fig. 1 zu sehen. Das Eingriffselement 4 ist als stabförmiges Element mit rechteckigem oder quadratischem Querschnitt ausgeführt und greift mit seinem einen Ende in den Ringraum 4 ein. Damit wird Schmiermittel aus dem Ringraum 4 in den Bereich der Stirnseiten 6, 7 der beiden Lagerringe 2, 3 gefördert bzw. verdrängt. D. h. das Eingriffselement 5 bildet im Schmierfett im Ringraum eine Spur, aus der Schmierfett verdrängt und in den stirnseitigen Bereich der Lagerringe 2, 3 gefördert wird.

Wie in Fig. 1 gesehen werden kann, liegt das Eingriffselement 5 in Arbeitsrichtung vor den Abstreiflippen 17 und 18 eines ersten Schmierstoffabstreifers 10.

Die Breite b des stabförmigen Eingriffselements 5 beträgt weniger als die Breite B, bevorzugt ist ein Wert zwischen 75 % und 98 % der Breite B vorgesehen.

Dies hat den Vorteil, dass nunmehr für die nächste volle Umdrehung des Innenrings 3 im Schmierfett Raum zur Verfügung steht, der erst gefüllt werden muss, bevor Fett aus dem Ringraum austritt. Bis dahin ist aber der Lagerring 3 wiederum an die "6-Uhr-Position" zurückgekehrt, wo in folgender Weise überschüssiges Fett abgenommen und einem Sammelraum zugeleitet wird.

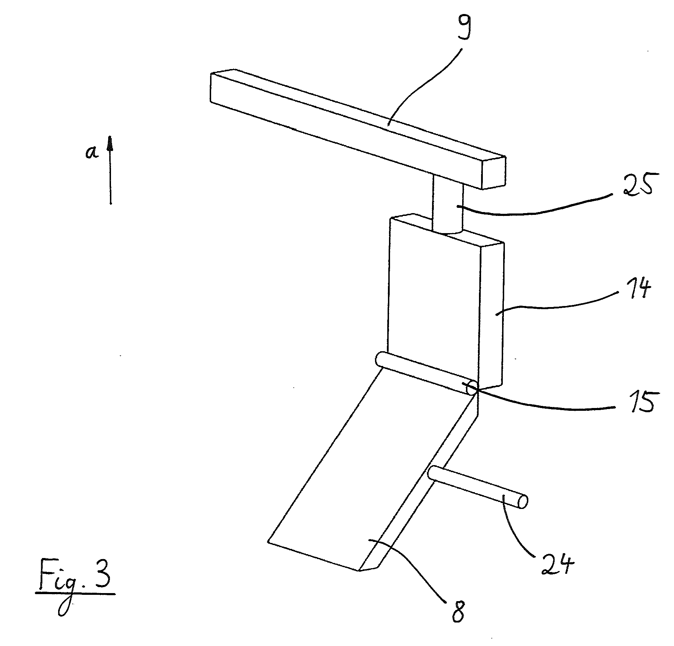

Am sich drehenden Lagerring 3 ist ein Abstreifelement 8 befestigt (s. hierzu Fig. 3). Das schaberförmige Abstreifelement 8 wird von einem Tragarm 9 gehalten, der am Lagerring 3 festgeschraubt ist. Das Abstreifelement 8 wird von einem Zwischenträger 14 gehalten. Zwischen dem Zwischenträger 14 und dem Abstreifelement 8 ist ein Federelement 15 angeordnet, das das Abstreifelement 8 gegen die Stirnseiten 6, 7 der Lagerringe 2, 3 drückt. Das Federelement 15 bildet demgemäß ein federvorgespanntes Gelenk, mit dem das Abstreifelement 8 relativ zum Zwischenträger 14 geschwenkt werden kann. Die Federkraft bzw. das von der Feder ausgeübte Moment kann eingestellt werden, um den gewünschten Anpressdruck zu erzielen. Das Abstreifelement 8 kann aus Polytetrafluoräthylen, aus Filz oder auch aus einem Federblech bestehen, was gemäß der Verschleißsituation zu entscheiden ist. Zur optimalen Anpassung des Abstreifelements 8 ist noch ein Drehgelenk 25 vorgesehen, so dass ein bestmögliches Abschaben von Fett von den Lageringen 2, 3 sichergestellt ist.

Am ortsfesten Lagerring 2 sind in Umfangsrichtung beabstandet im vertikal am tiefsten liegenden Bereich zwei Schmierstoffabstreifer 10 und 11 angeordnet.

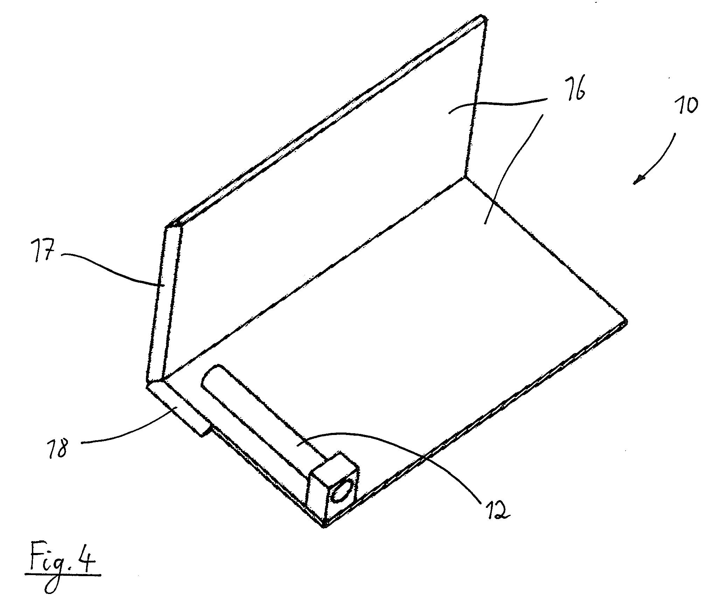

Der erste Schmierstoffabstreifer 10 dient dem groben Abwischen von Fett von den Stirnseiten 6, 7 der Lagerringe 2, 3; er ist in Fig. 4 dargestellt. Der Schmierstoffabstreifer 10 weist einen Blechträger 16 auf, auf dem ein zylinderförmiger Körper 12 fest montiert ist. Am Blechträger 16 sind zwei Abstreiflippen 17, 18 für das Abstreifen von Medium an der rotierenden Stirnseite 7 ausgebildet, die aus Polytetrafluoräthylen, aus Filz oder auch aus einem Federblech bestehen können. Wenn das Abstreifelement 8 bei jeder Umdrehung des Innenrings 3 über den Schmierstoffabstreifer 10 gezogen wird, bleibt demgemäß das abgestriffene Fett am zylinderförmigen Körper hängen (der bezüglich seiner Geometrie aber auch anders ausgebildet sein kann). Vom Schmierstoffabstreifer 10 kann dann das aufgesammelte Fett in Richtung der Schwerkraft zu einem (nicht dargestellten) Sammelraum geleitet werden.

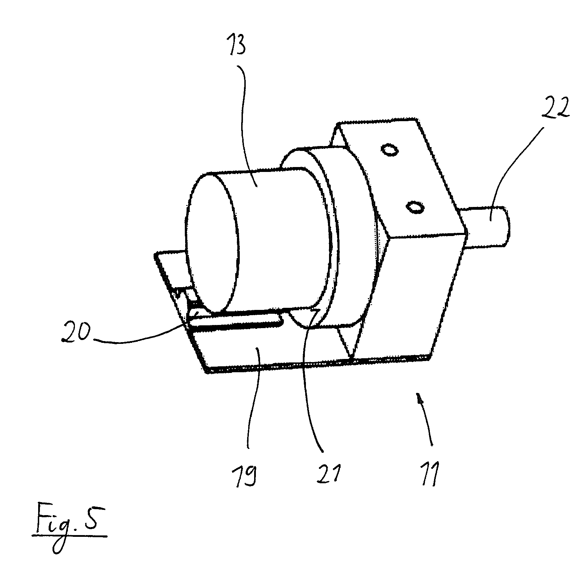

Der zweite Schmierstoffabstreifer 11 dient dem feinen Abwischen von Fett von den Stirnseiten 6, 7 der Lagerringe 2, 3; er ist in Fig. 5 dargestellt. Der Schmierstoffabstreifer 11 weist einen Blechträger 19 auf, auf dem ein zylinderförmiger Körper 13 drehbar gelagert ist. Am Blechträger 19 ist eine Abstreiflippe 20 für Schmierstoff angeordnet, der am zylinderförmigen Körper 13 anhaftet. Der zylinderförmige Körper 13 selber bildet eine Abstreiffläche für das Abstreifelement 8, wenn letzteres bei jeder Umdrehung des Lagerinnenrings 3 den Körper 13 passiert. Ein radial vergrößerter Bereich des zylinderförmigen Körpers 13 bildet eine seitliche Abstreifkante 21 für das Abstreifelement 8. Wenn das Abstreifelement 8 bei jeder Umdrehung des Innenrings 3 über den Schmierstoffabstreifer 11 gezogen wird, bleibt demgemäß das abgestriffene Fett am zylinderförmigen Körper 13 hängen. Vom Schmierstoffabstreifer 11 kann dann das aufgesammelte Fett in Richtung der Schwerkraft zum Sammelraum geleitet werden. Für den Körper 13 sind aber auch alternative Ausgestaltungen möglich (beispielsweise ein statisch angeordnetes Element mit L-förmigem Profil).

Der zylinderförmige Körper 13 ist drehangetrieben; dargestellt ist eine Antriebswelle 22, nicht indes der Antrieb selber. Der Antrieb kann elektrisch erfolgen. Eine andere Möglichkeit ist ein direkter mechanischer Antrieb durch den rotierenden Innenring 3.

Wesentlich ist, dass das sich mit dem rotierenden Innenring 3 mitdrehende Abstreifelement 8 nicht über dem gesamten Umfang des Außenrings 2 sirnseitig an den Stirnseiten 6, 7 anliegt, sondern im unteren Bereich - d. h. im Bereich der "6-Uhr-Position" - von den Stirnseiten 6, 7 der Lagerringe 2, 3 abgehoben wird. Hierzu sind Mittel 23, 24 zum Abheben des Abstreifelements 8 vorhanden.

Diese Mittel bestehen zum einen aus einer Führungsschiene 23 und zum anderen aus einem Leitfinger 24. Die Führungsschiene 23 ist im unteren Bereich des Lagerrings 2 befestigt. Der Leitfinger 24 ist indes am Abstreifelement 8 befestigt, wie es am besten aus Fig. 3 hervorgeht.

Die Führungsschiene 23 wird dabei aus drei miteinander stetig verbundenen Abschnitten 23', 23" und 23'" gebildet, s. Fig. 2. Der erste Abschnitt 23' genauso wie der dritte Abschnitt 23'" sind als Rampen ausgebildet, an denen der Leitfinger 24 bei der Drehung des Innenrings 3 relativ zum Außenring 2 anläuft, wenn die entsprechende Relativstellung zwischen den Lagerringen 2, 3 erreicht ist. Der Abschnitt 23' in Fig. 2 erstreckt sich demgemäß von einem - in Achsrichtung a gesehen - tiefsten Punkt P₁ kommend bis zu einem Punkt P₂ stetig aus der Zeichenebene herauskommend in Achsrichtung a. Hier schließt sich der zweite Abschnitt 23" an, wobei dieser in konstanter axialer Lage über einen Umfangsabschnitt des Lageraußenrings 2 entlang eines Kreisbogens verläuft. Am Punkt P₃ geht der zweite Abschnitt 23" in den dritten Abschnitt 23'" über. Zwischen den Punkten P₃ und P₄ fällt der dritte Abschnitt 23'" wieder nach unten in die Zeichenebene in Achsrichtung a ab.

Demgemäß wird das Abstreifelement 8 beim Anlauf des Leitfingers 24 an der Führungsschiene 23 zunächst in Achsrichtung a abgehoben - entgegen der Federvorspannkraft infolge des Federelements 15 -, dann entlang des Abschnitt 23" ohne Kontakt zu den Stirnseiten 6, 7 der Lagerringe 2, 3 geführt und hierbei an den Schmierstoffabstreifern 10 und 11 vorbeigeführt, bevor das Abstreifelement 8 über den Verlauf des dritten Abschnitts 23'"' wird auf die Stirnseiten 6, 7 aufgesetzt wird.

Die Mittel 23, 24 erlauben also ein definiertes Abheben und Aufsetzen des Abstreifelements 8 auf die Stirnseiten 6, 7.

### Bezugszeichenliste

- 1: Lageranordnung
- 2: erster Lagerring (stationärer Außenring)
- 3: zweiter Lagerring (rotierender Innenring)
- 4: Ringraum
- 5: Eingriffselement
- 6: Stirnseite des ersten Lagerrings
- 7: Stirnseite des zweiten Lagerrings
- 8: Abstreifelement
- 9: Tragarm
- 10: Schmierstoffabstreifer
- 11: Schmierstoffabstreifer
- 12: zylinderförmiger Körper
- 13: zylinderförmiger Körper
- 14: Zwischenträger
- 15: elastische Vorspannmittel (Federelement)
- 16: Blechträger
- 17: Abstreiflippe
- 18: Abstreiflippe
- 19: Blechträger
- 20: Abstreiflippe
- 21: Abstreifkante
- 22: Antriebswelle
- 23, 24: Mittel zum Abheben des Abstreifelements
- 23: Führungsschiene (Führungskulisse)
- 23': erster Abschnitt der Führungsschiene (Rampe)
- 23": zweiter Abschnitt der Führungsschiene
- 23"': dritter Abschnitt der Führungsschiene (Rampe)
- 24: Leitfinger
- 25: Drehgelenk

- a: axiale Richtung
- b: Breite des stabförmigen Bauteils / des stabförmigen Abschnitts
- B: radiale Breite des Ringraums
- r: radiale Richtung

- P₁: Punkt
- P₂: Punkt
- P₃: Punkt
- P₄: Punkt

## Patentansprüche

1. Lageranordnung (1), die einen ersten, stationären Lagerring (2) und einen zweiten, rotierenden Lagerring (3) umfasst, wobei zwischen den beiden Lagerringen (2, 3) ein zumindest teilweise mit einem Schmiermittel gefüllter Ringraum (4) ausgebildet ist, wobei an dem zweiten rotierenden Lagerring (3) ein Abstreifelement (8) angeordnet ist, das zumindest über einen Abschnitt des Umfangs des ersten Lagerrings (2) im Bereich der Stirnseiten (6, 7) der Lagerringe (2, 3) anliegt,
**dadurch gekennzeichnet, dass**
Mittel (23, 24) vorhanden sind, mit denen das Abstreifelement (8) über einen definierten Umfangsabschnitt des ersten Lagerrings (2) von den Stirnseiten (6, 7) der Lagerringe (2, 3) in axiale Richtung (a) abgehoben und an mindestens einem Schmierstoffabstreifer (10, 11) vorbeigeführt wird.

2. Lageranordnung nach Anspruch 1, **dadurch gekennzeichnet, dass** die Mittel (23, 24) einen Leitfinger (24) umfassen, der an dem Abstreifelement (8) angeordnet ist, und dass die Mittel (23, 24) eine Führungsschiene (23) für den Leitfinger (24) umfassen, die an dem stationären Lagerring (2) angeordnet ist.

3. Lageranordnung nach Anspruch 2, **dadurch gekennzeichnet, dass** sich die Führungsschiene (23), eine Führungskulisse für den Leitfinger (24) bildend, aus drei Abschnitten (23', 23", 23'") zusammensetzt, wobei die in Umfangsrichtung des ersten Lagerrings (2) endseitig gelegenen Abschnitte (23', 23"') als Rampen für den Leitfinger (24) ausgebildet sind und wobei ein sich zwischen den endseitig gelegenen Abschnitten (23', 23'") befindlicher mittiger Abschnitt (23") als in Umfangsrichtung des ersten Lagerrings (2) verlaufender Abschnitt ausgebildet ist.

4. Lageranordnung nach Anspruch 2 oder 3, **dadurch gekennzeichnet, dass** die Führungsschiene (23) aus einem Draht besteht, der zum Anlauf des Leitfingers (24) ausgebildet ist.

5. Lageranordnung nach einem der Ansprüche 1 bis 4, **dadurch gekennzeichnet, dass** das Abstreifelement (8) mit elastischen Vorspannmitteln (15) gegen den Bereich der Stirnseite (6, 7) der Lagerringe (2, 3) gedrückt wird.

6. Lageranordnung nach einem der Ansprüche 1 bis 5, **dadurch gekennzeichnet, dass** das Abstreifelement (8) an einem Tragarm (9) angeordnet ist, wobei der Tragarm (9) am zweiten, rotierenden Lagerring (3) angeordnet ist.

7. Lageranordnung nach Anspruch 6, **dadurch gekennzeichnet, dass** zwischen dem Tragarm (9) und dem Abstreifelement (8) ein Drehgelenk (25) wirksam angeordnet ist, mit dem das Abstreifelement (8) um eine in axiale Richtung (a) weisende Drehachse gedreht werden kann.

8. Lageranordnung nach einem der Ansprüche 1 bis 7, **dadurch gekennzeichnet, dass** im Bereich der Mittel (23, 24) zum Abheben des Abstreifelements (8) zwei Schmierstoffabstreifer (10, 11) angeordnet sind, die bei der Rotation des zweiten Lagerrings (3) vom Abstreifelement (8) überstrichen werden.

9. Lageranordnung nach Anspruch 8, **dadurch gekennzeichnet, dass** ein erster Schmierstoffabstreifer (10) einen ortsfesten zylinderförmigen Körper (12) aufweist, dessen Längsachse in radiale Richtung (r) weist.

10. Lageranordnung nach Anspruch 8 oder 9, **dadurch gekennzeichnet, dass** ein zweiter Schmierstoffabstreifer (11) einen rotierenden zylinderförmigen Körper (13) aufweist, dessen Längsachse in radiale Richtung (r) weist.

11. Lageranordnung nach einem der Ansprüche 1 bis 10, **dadurch gekennzeichnet, dass** die Mittel (23, 24) zum Abheben des Abstreifelements (8) in einem vertikal am tiefsten liegenden Bereich der Lagerringe (2, 3) angeordnet sind.

## Claims

1. Bearing arrangement (1) which comprises a first, stationary bearing ring (2) and a second, rotating bearing ring (3), an annular space (4) which is filled at least partially with a lubricant being formed between the two bearing rings (2, 3), a stripping element (8) being arranged on the second rotating bearing ring (3), which stripping element (8) bears at least over a section of the circumference of the first bearing ring (2) in the region of the end sides (6, 7) of the bearing rings (2, 3), **characterized in that** there are means (23, 24), by way of which the stripping element (8) is raised up in the axial direction (a) from the end sides (6, 7) of the bearing rings (2, 3) over a defined circumferential section of the first bearing ring (2) and is guided past at least one lubricant stripper (10, 11).

2. Bearing arrangement according to Claim 1, **characterized in that** the means (23, 24) comprise a guiding finger (24) which is arranged on the stripping element (8), and **in that** the means (23, 24) comprise a guide rail (23) for the guiding finger (24), which guide rail (23) is arranged on the stationary bearing ring (2).

3. Bearing arrangement according to Claim 2, **characterized in that** the guide rail (23) is assembled from three sections (23', 23", 23"'), so as to form a slotted guide for the guiding finger (24), the sections (23', 23"') which lie on the end side in the circumferential direction of the first bearing ring (2) being configured as ramps for the guiding finger (24), and a middle section (23'') which is situated between the sections (23', 23''') which lie on the end side being configured as a section which runs in the circumferential direction of the first bearing ring (2).

4. Bearing arrangement according to Claim 2 or 3, **characterized in that** the guide rail (23) consists of a wire which is configured for the guiding finger (24) to run on.

5. Bearing arrangement according to one of Claims 1 to 4, **characterized in that** the stripping element (8) is pressed by way of an elastic prestressing means (15) against the region of the end side (6, 7) of the bearing rings (2, 3).

6. Bearing arrangement according to one of Claims 1 to 5, **characterized in that** the stripping element (8) is arranged on a carrying arm (9), the carrying arm (9) being arranged on the second, rotating bearing ring (3).

7. Bearing arrangement according to Claim 6, **characterized in that** a rotary joint (25) is arranged actively between the carrying arm (9) and the stripping element (8), by way of which rotary joint (25) the stripping element (8) can be rotated about a rotational axis which points in the axial direction (a).

8. Bearing arrangement according to one of Claims 1 to 7, **characterized in that** two lubricant strippers (10, 11) are arranged in the region of the means (23, 24) for raising up the stripping element (8), which lubricant strippers (10, 11) are swept over by the stripping element (8) during the rotation of the second bearing ring (3).

9. Bearing arrangement according to Claim 8, **characterized in that** a first lubricant stripper (10) has a stationary cylindrical body (12), the longitudinal axis of which points in the radial direction (r).

10. Bearing arrangement according to Claim 8 or 9, **characterized in that** a second lubricant stripper (11) has a rotating cylindrical body (13), the longitudinal axis of which points in the radial direction (r).

11. Bearing arrangement according to one of Claims 1 to 10, **characterized in that** the means (23, 24) for raising up the stripping element (8) are arranged in a region of the bearing rings (2, 3) which lies at the lowest point vertically.

## Revendications

1. Système de palier (1) comprenant une première bague de palier stationnaire (2) et une deuxième bague de palier rotative (3), un espace annulaire (4) au moins en partie rempli de lubrifiant étant réalisé entre les deux bagues de palier (2, 3), un élément de raclage (8) étant disposé au niveau de la deuxième bague de palier rotative (3), lequel s'applique sur au moins une portion de la périphérie de la première bague de palier (2) dans la région des côtés frontaux (6, 7) des bagues de palier (2, 3),
**caractérisé en ce que**
des moyens (23, 24) sont prévus avec lesquels l'élément de raclage (8) est soulevé dans la direction axiale (a) sur une portion définie de la périphérie de la première bague de palier (2) depuis les côtés frontaux (6, 7) des bagues de palier (2, 3) et est guidé devant au moins un racloir de lubrifiant (10, 11).

2. Système de palier selon la revendication 1, **caractérisé en ce que** les moyens (23, 24) comprennent un doigt de guidage (24) qui est disposé sur l'élément de raclage (8), et **en ce que** les moyens (23, 24) comprennent un rail de guidage (23) pour le doigt de guidage (24), lequel est disposé sur la bague de palier stationnaire (2).

3. Système de palier selon la revendication 2, **caractérisé en ce que** le rail de guidage (23), constituant une coulisse de guidage pour le doigt de guidage (24), se compose de trois portions (23', 23'', 23"'), les portions (23', 23"') situées du côté des extrémités dans la direction périphérique de la première bague de palier (2) étant réalisées sous forme de rampe pour le doigt de guidage (24) et une portion centrale (23") située entre les portions situées du côté des extrémités (23', 23"') étant réalisée sous forme de portion s'étendant dans la direction périphérique de la première bague de palier (2).

4. Système de palier selon la revendication 2 ou 3, **caractérisé en ce que** le rail de guidage (23) se compose d'un fil métallique qui est réalisé pour le lancement du doigt de guidage (24).

5. Système de palier selon l'une quelconque des revendications 1 à 4, **caractérisé en ce que** l'élément de raclage (8) est pressé avec des moyens de précontrainte élastiques (15) contre la région du côté frontal (6, 7) des bagues de palier (2, 3).

6. Système de palier selon l'une quelconque des revendications 1 à 5, **caractérisé en ce que** l'élément de raclage (8) est disposé au niveau d'un bras de support (9), le bras de support (9) étant disposé au niveau de la deuxième bague de palier rotative (3).

7. Système de palier selon la revendication 6, **caractérisé en ce qu'**entre le bras de support (9) et l'élément de raclage (8) est disposée activement une articulation pivotante (25) avec laquelle l'élément de raclage (8) peut être tourné autour d'un axe de rotation orienté dans la direction axiale (a).

8. Système de palier selon l'une quelconque des revendications 1 à 7, **caractérisé en ce que** dans la région des moyens (23, 24) pour soulever l'élément de raclage (8) sont disposés deux racloirs de lubrifiant (10, 11) qui sont balayés par l'élément de raclage (8) lors de la rotation de la deuxième bague de palier (3).

9. Système de palier selon la revendication 8, **caractérisé en ce qu'**un premier racloir de lubrifiant (10) présente un corps fixe de forme cylindrique (12) dont l'axe longitudinal est tourné dans la direction radiale (r).

10. Système de palier selon la revendication 8 ou 9, **caractérisé en ce qu'**un deuxième racloir de lubrifiant (11) présente un corps cylindrique rotatif (13) dont l'axe longitudinal est orienté dans la direction radiale (r).

11. Système de palier selon l'une quelconque des revendications 1 à 10, **caractérisé en ce que** les moyens (23, 24) pour soulever l'élément de raclage (8) sont disposés dans une région des bagues de palier (2, 3) située verticalement en position la plus inférieure.
